Europäisches Patentamt

European Patent Office

Office européen des brevets

(11) Publication number: **0 529 791 A1**

# EUROPEAN PATENT APPLICATION

(21) Application number: **92306512.2**

(22) Date of filing: **16.07.92**

(51) Int. Cl.5: **C08G 18/80**, C08G 18/50, C08G 18/32, C08G 18/12

(30) Priority: **26.08.91 US 750130**

(43) Date of publication of application:
**03.03.93 Bulletin 93/09**

(84) Designated Contracting States:
**DE FR GB**

(71) Applicant: **TEXACO CHEMICAL COMPANY**
**3040 Post Oak Boulevard**
**Houston, Texas 77056(US)**

(72) Inventor: **Primeaux, Dudley Joseph**
**Route 4, Box 229-B4**
**Elgin, Texas 78733(US)**
Inventor: **Anglin, Kenneth Conrad**
**10001 Lake Ridge**
**Austin, Texas 78621(US)**

(74) Representative: **Brock, Peter William et al**
**UROUHART-DYKES & LORD 91 Wimpole**
**Street**
**London W1M 8AH (GB)**

(54) Ouasi-prepolymers of aliphatic diisocyanates and polyoxyalkylene polyamine mixtures useful for making polyurea elastomers.

(57) Isocyanate-terminated quasi-prepolymers can be obtained by reacting a mixture of polyoxyalkylene polyamines having an average amine functionality of greater than 2 with an excess of an aliphatic diisocyanate.

Reaction of the quasi-prepolymers with polyoxyalkylene polyamines produces elastomers of improved curing properties and stiffness, useful for RIM, spray and coating applications.

EP 0 529 791 A1

This invention concerns polyurea polyisocyanates, and more particularly quasi-prepolymers of such having an isocyanate functionality over 2, made from polyoxyalkylene polyamine mixtures and aliphatic diisocyanate. These materials react with polyoxyalkylene polyamine to make elastomers useful in RIM, spray and coating applications.

Polyurea elastomers have various uses, including as coatings such as for spray formulations. These materials have a desirable balance of properties including: light stability; fast cure; relative water insensitivity; ability to be used in solventless systems; excellent physical properties, including tensile strength, elongation and abrasion resistance; pigmentation capability; ease of application, such as using commercially available spray application equipment; and, since no catalyst is needed, consistent reactivity and long term storage stability.

Polyureas have been made from quasi-prepolymers of polyoxyalkylene polyamine and isocyanate. For example, US-A-4732919 discloses polyurea elastomer made from a high molecular weight polyol or polyoxyalkylene polyamine, a chain extender and a quasi-prepolymer of polyoxyalkylene polyamine and aromatic isocyanate. Urethane coatings made from aliphatic aromatic diisocyanates are disclosed in US-A-4465713. Polyurea spray formulations based on aliphatic isocyanates and chain extenders are disclosed in EP-A-0416819.

Quasi-prepolymers made from aliphatic isocyanates and polyoxyalkylene diamines having functionalities of 2 or less can give poor cure properties when used in elastomeric systems.

There is therefore a need for isocyanate quasiprepolymers exhibiting improved cure and other properties.

This invention concerns a polyurea comprising polyisocyanate quasi-prepolymer having an isocyanate functionality over 2. The quasi-prepolymer is the reaction product of a mixture of polyoxyalkylene polyamines, having an amine functionality greater than 2, such as diamine/triamine blends, reacted with a stoichiometric excess of an aliphatic diisocyanate. The invention also provides an aliphatic polyurea elastomer comprising the reaction product of an (A) component containing the polyurea polyisocyanate with a (B) component containing polyoxyalkylene polyamine.

It has been discovered that quasi-prepolymers made from polyfunctional mixtures of polyoxyalkylene polyamines reacted with aliphatic diisocyanate, possess improved cure and other properties.

The polyoxyalkylene polyamine mixtures comprise any two or more of such compounds which, when reacted with aliphatic diisocyanate, produce polyisocyanate quasiprepolymer having an isocyanate functionality over 2, preferably between 2 and 6, and most preferably between 2 and 3. Typically, mixtures of polyoxyalkylene polyamines comprise diamine mixed with tri- or higher-amines, and preferably comprise blends of diamine and triamine.

The polyoxyalkylene polyamines may be any, including known, polyoxyalkylene polyamines. The polyoxyalkylene polyamines include primary and/or secondary amine-terminated polyether polyols, typically having an average molecular weight of more than 100 and preferably from 200 to 5,000; a functionality of from 2 to 6 and preferably from 2 to 3; and an amine equivalent weight of 750 to 4,000.

Suitable polyoxyalkylene polyamines include compounds shown in Formula 1.

$$H_2N-(C_nH_{2n}O)_x\{-Q[-(OC_nH_{2n})_y-NH_2]_a\}_b\{-C_nH_{2n}NH_2\}_{1-b} \qquad (1)$$

wherein Q is the polyvalent residue of an active hydrogen-containing compound, used as an initiator for tri- or higher-functional polyoxyalkylene amines, having a valence of $a + 1$, where $a$ is at least 2, preferably from 2 to 5, and most preferably 2. The degree of amine functionality is determined by $b$, which may be 0 or 1. When $b$ is 0, Formula 1 covers diamines, whereas when $b$ is 1, Formula 1 covers tri- or higher-amines. The number of carbon atoms in each alkylene repeating unit is defined by $n$, each of which is individually at least 2, preferably 2 or 3, and most preferably 3. The amount of oxyalkylene is given by $x$ and each $y$ which is present $a$ times. The sum of $x$ plus $y$ (i.e. all the oxyalkylene groups) is at least 2, preferably from 2 to 200, and most preferably from 2 to 85.

Typical initiators include, among others, one or more of the following: polyhydroxy compounds, including diols like ethylene glycol, propylene glycol, 1,2- or 1,4-butane diols, as well as triols like trimethylolpropane and glycerol. Preferred initiators include trimethylolpropane and glycerol. Typical oxyalkylene repeating units include oxyethylene, oxypropylene, oxybutylene, and so on, including mixtures thereof. When two or more oxyalkylenes are used, they may be present in any form, such as randomly or in blocks.

Preferred polyoxyalkylene polyamines include JEFFAMINE® polyoxyalkylene amines from Texaco Chemical Co. Inc., such as diamines D-230, D-400, D-2000 and D-4000, and triamines T-403, T-3000 and T-5000.

2

Polyoxyalkylene polyamine mixtures typically comprise diamines and tri- or higher-amines, preferably triamines. The relative proportion of diamine to tri- or higher-amine is any amount effective in producing quasi-prepolymer product having an isocyanate functionality over 2. Typically, the relative weight ratio of diamine to tri- or higher-amine is from 1:100 to 100:1, preferably from 1:1 to 5:1, and most preferably from 2:1 to 4:1.

The aliphatic diisocyanate may be any, including known, compound having to isocyanate groups bonded to aliphatic segment(s). Aliphatic diisocyanates can be represented by Formula 2.

OCN-R-NCO    (2)

wherein R is an organic radical having aliphatic or cycloaliphatic components adjacent to each isocyanate group. R can be straight or branched chain, acyclic, cyclic, or heterocyclic, saturated, unsaturated, or include aromatic, unsubstituted or halo-substituted, hydrocarbylene having at least 1, preferably from 6 to 25, and most preferably from 6 to 12 carbon atoms. Typical aliphatic diisocyanates include, among others, one or more of the following: alkylene diisocyanates with 4 to 12 carbon atoms in the alkylene radical, such as 1,12-dodecane diisocyanate, 1,4- tetramethylene diisocyanate and 1,6-hexamethylene diisocyanate; cycloaliphatic diisocyanates such as 1,3- and 1,4-cyclohexane diisocyanate, 1-isocyanato-3,3,5-trimethyl-5-isocyanatomethylcyclohexane (isophorone diisocyanate), 4,4'-, 2,2'- and 2,4'-dicyclohexylmethane diisocyanate; alkaryl and aralkyl diisocyanates, such as tetraalkylxylene diisocyanates like tetramethylxylene diisocyanates; trimerized or biuretic diisocyanates, and other aliphatic isocyanates, such as described in US-A-4465713, US-A-4705814 and US-A-4748192.

The relative amount of aliphatic diisocyanate to polyoxyalkylene polyamines mixture is at least a stoichiometric excess of aliphatic diisocyanate to polyoxyalkylene polyamines. Generally more than 1, preferably from 1.5 to 25, and most preferably from 10 to 25, mole equivalents of isocyanate are used per mole of amine.

Although no additional ingredients, such as solvent or catalyst, are needed or preferred to conduct the reaction, any other suitable materials may be present, if desired.

The reaction between the aliphatic diisocyanate and the polyoxyalkylene polyamines may be conducted under any suitable, including known, conditions for effecting reactions between isocyanates and amines. Typically, reactions are conducted under ambient temperature and pressure. Since the reaction precedes rapidly, the ingredients are preferably thoroughly mixed, such as using a high speed mixer.

The aliphatic diisocyanate and polyoxyalkylene polyamines react to produce a polyurea polyisocyanate quasi-prepolymer having an isocyanate functionality over 2. The term "quasi-prepolymer" describes a mixture of monomers and oligomers, essentially dimers, made using a stoichiometric excess of one type of monomer, in this case diisocyanate, as compared with the other monomer, i.e. polyamine. The quasi-prepolymers possess improved properties, particularly as compared with corresponding quasi-prepolymers prepared using only diamines. Polyurea elastomers made from quasi-prepolymers of this invention have greater toughness and resilience, shown by higher tear strength and hardness, than when using quasi-prepolymers made from only diamines. Polyureas of this invention have better cure properties, including reduced tackiness, than those made using diamine-based quasi-prepolymers. In a preferred embodiment, polyureas made using quasi-prepolymers from diamine and tri- or higher-amine blends, are superior to quasi-prepolymers using only triamines, which give highly viscous, stringy product.

Aliphatic-polyurea elastomer can be made by reacting an (A) component containing the quasi-prepolymer and a (B) component containing polyoxyalkylene polyamine. The polyoxyalkylene polyamine in (B) can be one or more compounds of the previously described polyoxyalkylene polyamines, such as set forth in Formula 1. Other materials may be added, if desired, to the reaction. These optional ingredients include, among others, one or more of the following: chain extenders, such as low molecular weight polyoxyalkylene polyamines; foam stabilizers, such as silicone oil or emulsifier, organic silane or siloxane; pigments or colouring agents, such as titanium dioxide; reinforcing materials, such as chopped or milled glass fibres, carbon fibres, and/or other mineral fibres; blowing agents; catalysts, such as tertiary amines or organic tin compounds; fillers; surfactants; and other materials.

The relative amount of polyoxyalkylene polyamine to quasi-prepolymer is any amount sufficient to make a polyurea elastomer product. Typically, from 0.75 to 1.5, preferably from 0.85 to 1.25, and most preferably from 0.9 to 1.1, moles of amine are provided per mole of isocyanate. The polyoxyalkylene polyamine and quasi-prepolymer, along with any optional ingredients, are reacted under any suitable, including known, conditions for reacting polyoxyalkylene polyamines with polyisocyanate. Typically, the temperature during the reaction may be from 25 to 80°C, preferably from 50 to 80°C, and most preferably from 60 to 75°C. The components are typically combined or mixed under high pressure of at least 7.0 MPa (1,000 psig), preferably from 7.0 to 17.3 MPa (1,000 to 2,500 psig), and most preferably from 10.4 to 17.3 MPa (1,500 to 2,500 psig).

When used in spray applications, the components are typically impingement mixed directly using high pressure spray equipment, such as a GUSMER® VR-H-2000 proportioner fitted with a GX-7 spray gun. The components are typically used at a rate of at least 1 0.45 Kg/min (1 pound per minute) and preferably from 2.3 to 13.6 Kg/min (5 to 30 pounds per minute) and most preferably at about 9.1 Kg/min (20 pounds per minute).

The following examples present illustrative embodiments of this invention. All percentages given in the disclosure and claims are in weight percent, unless otherwise stated.

EXAMPLES

Terms used in the examples having the following meanings.

| Term | Description |
|---|---|
| D-230 | Polyoxypropylene diamine having a weight average molecular weight of about 230, called JEFFAMINE® D-230 from Texaco Chemical Co. Inc. |
| D-2000 | Polyoxypropylene diamine having a weight average molecular weight of about 2,000 called JEFFAMINE® D-2000 from Texaco Chemical Co. Inc. |
| m-TMXDI | m-$\alpha,\alpha',\alpha'$-tetramethyl-$\alpha,\alpha'$-diisocyanatoxylene, i.e. 1,3-bis(1-isocyanato-1-methylethyl)benzene, called m-TMXDI® from American Cyanamid Co. Inc. |

| Term | Description |
|---|---|
| T-403 | Polyoxypropylene triamine, made with trimethylol propane initiator, having a weight average molecular weight of about 440, called JEFFAMINE® T-403 from Texaco Chemical Co. Inc. |
| T-3000 | Polyoxypropylene triamine, made with glycerine initiator, having a weight average molecular weight of about 3,000, called JEFFAMINE® T-3000 from Texaco Chemical Co. Inc. |
| T-5000 | Polyoxypropylene triamine, made with glycerine initiator, having a weight average molecular weight of about 5,000, called JEFFAMINE® T-5000 from Texaco Chemical Co. Inc. |

Unless otherwise indicated, test results given in the Examples use the following procedures:

Elongation: determined by standard ASTM D-638 procedure, given in percent.

Flash Point: determined by standard Penski-Martin closed cup procedure, given in degrees Centigrade.

NCO#: Isocyanate functionality determined by standard Texaco Chemical Co. (TCC) titration procedure, published as Method 14.5, given in milliequivalents per gram (meq/g).

Modulus: determined by standard ASTM D-638 and D-790 procedures for 100% and 300% tests, given in MPa (psi).

Shore Hardness: determined by standard ASTM D-624 procedure, given at initial measurement (0 seconds).

Tear strength: determined by standard ASTM D-624 procedure, given in Newtons per metre ((pounds per linear inch (pli)).

Tensile strength: determined by standard ASTM D-638 procedure, given in MPa (psi).

Viscosity: determined by standard TCC Procedure, published as Method 30.6, given in MPa/s (centipoise).

Examples 1-5: Quasi-Prepolymer Preparation

These Examples show how to make various aliphatic quasi-prepolymers, including polyurea polyisocyanates having an isocyanate functionality over 2 as shown in Examples 1 and 3. Control examples 2C, 4C and 5C show corresponding quasi-prepolymers made using polyoxyalkylene diamines. The amount and type of ingredients, as set forth in Table 1, are reacted using the following procedure. Diisocyanate is added to a container, under nitrogen atmosphere. A high speed mixer, operating at over 2,000 rpm, is suspended in the diisocyanate. With agitation, the polyoxyalkylene polyamine, with diamine/triamine blends

4

being premixed, is added continuously. A slight exotherm, of from 40 to 44°C, is observed. Clear product is obtained and measured for the amount of isocyanate functionality, given in milliequivalents per gram, viscosity, given in MPa/s (centipoise), and flash point temperature.

## TABLE 1

## QAUSI-PREPOLYMER PREPARATION

| Example No. | 1 | 2C | 3 | 4C | 5C |
|---|---|---|---|---|---|
| **Ingredients:** | | | | | |
| Diisocyanate | 40% | 40% | 65% | 60% | 65% |
| D-2000 | 48% | 60% | 25% | 40% | 35% |
| T-5000 | 12% | – | 10% | – | – |
| **Product Analysis:** | | | | | |
| NCO# (meq/g) | 2.64 | 2.52 | 4.38 | – | – |
| Viscosity MPa.s (cps) | 2,635 | 1,332 | 310 | – | – |
| Flash Point (°C) | 485° | 365° | >400° | – | – |

Examples 6-10: Elastomer Preparation and Analysis

These examples illustrate how to make various aliphatic polyurea elastomers using the quasi-prepolymers prepared in Examples 1-5C. Using the components listed in Table 2, the quasi-prepolymer, i.e. Component (a), and a blend of the polyoxyalkylene polyamines, i.e. Component (B), are spray mixed onto mold released, steel panel at a 1:1 volume ratio, using a plural component, GUSMER® VR-H-2000 proportioner fitted with a GX-7 spray gun, at block and hose temperatures of 71°C (160°F) and at a rate of 9.1 Kg/min (20 pounds per minute) total mixture. Each component is fed at a line pressure of from 7.0 to 13.9 MPa (1,000 to 2,000 psig). The resulting film cures in a few seconds and is tested using the previously described procedures. The test results are presented in Table 2. Polyurea elastomers of similar compositions can be compared, i.e. Example 6 with Example 7C and Example 8 with Examples 9C and 10C. The results show that polyurea of Example 7C which is too tacky to test can be made useful by substituting the quasi-prepolymer of this invention in Example 1 having a 4:1 mixture of diamine to triamine. The other test results show that increased tear strength and hardness are provided by the polyurea of this invention in Example 8, made with quasi-prepolymer from diamine/triamine mixtures as compared with the polyureas of Examples 9C and 10C made from quasi-prepolymer having only diamine.

TABLE 2

ELASTOMER PREPARATION AND ANALYSIS

| Example No. | 6 | 7C | 8 | 9C | 10C |
|---|---|---|---|---|---|
| Component (A) | Ex.1 | Ex.2C | Ex.3 | Ex.4C | Ex.5C |
| Component (B): | | | | | |
| T-5000 | 35.1 | 33.6 | 18.5 | 17.4 | – |
| T-3000 | – | – | – | – | 20.3 |
| D-2000 | 35.1 | 33.6 | 12.3 | 26.1 | 13.6 |
| T-403 | 17.5 | 17.7 | 41.1 | 26.1 | 42.4 |
| D-230 | 12.3 | 15.1 | 23.1 | 30.4 | 23.7 |
| Processing: | | | | | |
| Index | 1.05 | 1.05 | 1.00 | 1.05 | 1.05 |
| A/B Vol. Ratio | 1.00 | 1.00 | 1.00 | 1.00 | 1.00 |
| A/B Wt. Ratio | 1.06 | 1.06 | 1.10 | 1.10 | 1.10 |
| Elastomer Properties: | | | | | |
| Tensile Strength (MPa) | 4.2 | * | 9.8 | 6.6 | 10.7 |
| Tensile Strength (psi) | 603 | * | 1426 | 956 | 1549 |
| Elongation (%) | 499 | * | 112 | 327 | 111 |
| Tear strength (N/m) | 205 | * | 669 | 468 | 585 |
| Tear strength (pli) | 117 | * | 382 | 267 | 334 |
| Shore D Hardness (0sec) | 20 | * | 54 | 46 | 51 |
| Shore A Hardness (0sec) | 57 | * | – | – | – |
| 100% Modulus (MPa) | 1.7 | * | 8.9 | 4.8 | 9.5 |
| 100% Modulus (psi) | 248 | * | 1297 | 693 | 1373 |
| 300% Modulus (MPa) | 2.9 | * | – | – | – |
| 300% Modulus (psi) | 420 | * | – | – | – |

\* – too tacky for testing

## Claims

1. A isocyanate-terminated quasi-prepolymer having an isocyanate functionality over 2, characterised in that it is obtainable by reacting a mixture of polyoxyalkylene polyamines having an average amine functionality greater than 2, with a stoichiometric excess of an aliphatic diisocyanate.

2. A prepolymer according to Claim 1 characterised in that the diisocyanate is monomeric and includes aromatic or cycloaliphatic moieties.

3. A prepolymer according to Claim 2 characterised in that the diisocyanate is 1,3-bis-(1-isocyanato-1-methylethyl) benzene or 1-isocyanato-3,3,5-trimethyl-5-isocyanatomethylcyclohexane).

4. A prepolymer according to any one of Claims 1 to 3 characterised in that the mixture of polyoxyalkylene polyamines comprises a mixture of compounds having the formula:

$H_2N-(C_nH_{2n}O)_x\{-Q[-(OC_nH_{2n})_y-NH_2]_a\}_b\{-C_nH_{2n}H_2\}_{1-b}$

wherein Q is the polyvalent residue of an active hydrogen compound, having a valence of a + 1,
a is at least 2,
b is 0 or 1,
n is at least 2, and
x + y is at least 2,
said mixture including at least one compound wherein b is 1.

5.  A prepolymer according to any one of Claims 1 to 4 characterised in that the mixture of polyamines comprises a mixture of diamine and tri- or higher-amines, having an average molecular weight above 100, and an amine equivalent weight from 750 to 4,000.

6.  A prepolymer according to Claim 5 characterised in that the mixture of polyamines comprises (1) polyoxypropylene diamine having an average molecular weight of 200 to 5,000; and (2) polyoxypropylene triamines having an average molecular weight of 400 to 5,000.

7.  An aliphatic polyurea elastomer obtainable by reacting a polyisocyanate with one or more polyoxyalkylene polyamines characterised in that the isocyanate is a prepolymer according to any one of Claims 1 to 6.

8.  A polyurea elastomer according to Claim 7 characterised in that the polyoxyalkylene polyamine comprises at least one compound of the formula:

$H_2N-(C_nH_{2n}O)_x\{-Q[-(OC_nH_{2n})_y-NH_2]_a\}_b\{-C_nH_{2n}NH_2\}_{1-b}$

wherein Q is the polyvalent residue of an active hydrogen compound, having a valence of a + 1,
a is at least 2,
b is 0 or 1,
n is at least 2, and
x + y is at least 2.

9.  A polyurea elastomer according to Claim 7 or 8 characterised in that the polyoxyalkylene polyamine has an average molecular weight of at least 100, an amine equivalent weight from 750 to 4,000, and a functionality of 2 to 6.

10. Use of an isocyanate-terminated prepolymer according to any one of Claims 1 to 6 as isocyanate in the production of polyureas by reacting isocyanates with polyoxyalkylene polyamines.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 705 814 (R.A. GRIGSBY ET AL.)<br>* claims 1-5 *<br>* column 2, line 17 - column 3, line 25 *<br>* column 4, line 14 - line 38 *<br>--- | 1-10 | C08G18/80<br>C08G18/50<br>C08G18/32<br>C08G18/12 |
| X | WO-A-8 605 795 (DOW)<br>* claims 1-5,8-10 *<br>* page 6, line 9 - page 7, line 13 *<br>* page 9, line 29 - page 10, line 4 *<br>* page 12, line 19 - line 23 *<br>* page 16, line 16 - line 24 *<br>--- | 1-10 | |
| X | US-A-5 013 813 (R.L. ZIMMERMAN ET AL.)<br>* claims 1,4 *<br>* column 3, line 11 - line 33 *<br>* column 4, line 44 - column 5, line 55 *<br>--- | 1-6 | |
| A | US-A-4 761 465 (G.P. SPERANZA ET AL.)<br>* claims 1,3-6 *<br>--- | 1 | |
| A | EP-A-0 148 381 (BASF)<br>* claims 1,4,6 *<br>* page 2, line 31 - page 3, line 27 *<br>--- | 1 | TECHNICAL FIELDS SEARCHED (Int. Cl.5) |
| D,A | US-A-4 732 919 (R.A. GRIGSBY ET AL.)<br>* claims 1-4 *<br>* column 2, line 32 - line 55 *<br>----- | 1 | C08G |

The present search report has been drawn up for all claims

| Place of search | Date of completion of the search | Examiner |
|---|---|---|
| THE HAGUE | 09 NOVEMBER 1992 | VAN PUYMBROECK M. A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)